# EUROPEAN PATENT APPLICATION

(11) **EP 4 738 809 A1**
(43) Date of publication of application: **06.05.2026**
(21) Application number: 25212241.1
(22) Date of filing: 30.10.2025
(51) Int. Cl.: H04N 1/00, G06F 3/12, G06T 7/00

(54) **INSPECTION SYSTEM FOR INSPECTING PRINT PRODUCT AND METHOD OF CONTROLLING INSPECTION SYSTEM**

(30) Priority: 05.11.2024 JP 2024193542
(71) Applicant: Canon Kabushiki Kaisha, Tokyo, 146-8501 (JP)
(72) Inventor: OISHI, Shoko, Tokyo, 146-8501 (JP)
(74) Representative: TBK

(57) **Abstract**

An inspection system includes a storage unit configured to store region information set before a single instruction for transmitting data including an image to be inspected based on the set region information is received. The data sent in response to the single instruction is received via an interface. A controller generates reference data and causes a printing unit to print the image, based on the received data, and inspects a read image generated by reading the printed image, based on the generated reference data and the stored region information.

## Description

### TECHNICAL FIELD

The present disclosure relates to an inspection system that is capable of quickly performing inspection of a print product.

### BACKGROUND

Print products obtained by printing using a printer are sometimes subjected to inspection of quality thereof. In this case, an inspection device compares a read image formed by reading a print product using a scanner or the like and a reference image, and quality inspection is performed on the print product based on a result of the comparison. As the reference image, there is used, for example, a RIP image generated before printing by the printer, a RIP image generated by RIP software, or a like image. For example, in a case where a print product has a stain, a portion corresponding to the statin is reflected on the read image of the print product. Then, in the quality inspection, the read image including the portion corresponding to the stain is compared with the RIP image including no portion corresponding to the stain, so that the inspection result of the print product is no good. Further, the reference image is required to be registered in the inspection device before execution of the equality inspection. For example, Japanese Laid-Open Patent Publication (Kokai) No. 2024-006762 discloses an apparatus that executes a reference image registration job for registering a reference image before the quality inspection. The apparatus described in Japanese Laid-Open Patent Publication (Kokai) No. 2024-006762 registers reference images of all pages included in a print job.

### SUMMARY

However, in a case where the apparatus described in Japanese Laid-Open Patent Publication (Kokai) No. 2024-006762 is used, it is required to perform job inputting two times, i.e. inputting of a job for reference image registration and inputting of a job for quality inspection. Then, RIP processing for the job of reference image registration (hereinafter referred to as prior RIP processing) and RIP processing for the job of quality inspection (hereinafter referred to as posterior RIP processing) are sequentially executed. For a user who desires quality inspection, there is a problem that time for the prior RIP processing is felt as waiting time until the start of the posterior RIP processing. The waiting time is preferably shorter.

The present disclosure is directed to providing an inspection system that is capable of quickly starting inspection of a print product.

A first aspect of the present disclosure provides an inspection system as specified in claim 1. Optional features are specified in claim 2 to 16.

A second aspect of the present disclosure provides an inspection system as specified in claim 17.

According to the present disclosure, it is possible to quickly start inspection of a print product.

Features of the present disclosure will become apparent from the following description of embodiments with reference to the attached drawings. The following description of embodiments is given by way of example.

### BRIEF DESCRIPTION OF THE DRAWINGS

FIG. 1 is a schematic view showing an entire configuration of an inspection system according to a first embodiment.
FIG. 2 is a block diagram showing hardware configurations of an image forming apparatus, an inspection unit, a large-capacity stacker, an inspection device, an information processing apparatus, a client personal computer (PC), and a reference image generation device.
FIG. 3 is a schematic view showing internal configurations of the image forming apparatus, the inspection unit, and the large-capacity stacker.
FIGS. 4A to 4D are block diagrams showing functional configurations of central processing units (CPUs) of the information processing apparatus, the image forming apparatus, the reference image generation device, and the inspection device, respectively.
FIG. 5 is a diagram showing an example of information related to image allocation.
FIG. 6 is a flowchart of a process (communication determination process for the reference image generation device) performed by the image forming apparatus.
FIG. 7 is a screen for performing an operation for specifying an inspection mode based on job properties of the information processing apparatus.
FIG. 8 is a flowchart of a job process performed by the image forming apparatus.
FIG. 9A is a flowchart of a synchronization process performed by the reference image generation device for synchronizing with the image forming apparatus.
FIG. 9B is a flowchart of a transmission process performed by the reference image generation device for transmitting a reference image to the inspection device.
FIG.9C is a flowchart of a transmission process performed by the image forming apparatus for transmitting image allocation information.
FIG. 10 is a flowchart of an inspection process performed by the inspection device.
FIG. 11 is a sequence diagram of a process performed between the information processing apparatus, the image forming apparatus, the reference image generation device, the inspection unit, and the inspection device.
FIG. 12 is a flowchart of an inspection process performed by an inspection device according to a second embodiment.
FIG. 13 is a diagram showing a screen displayed on a user interface (UI) panel of the inspection device.
FIG. 14 is a diagram showing a screen displayed on the UI panel of the inspection device.
FIG. 15 is a flowchart of a process (variation) performed by the inspection device.
FIG. 16 is a flowchart of a process performed by an inspection device according to a third embodiment.
FIG. 17 is a flowchart of a process (variation) performed by the inspection device.
FIG. 18 is a flowchart of a job process performed by an image forming apparatus according to a fourth embodiment.

### DESCRIPTION OF THE EMBODIMENTS

### First Embodiment

The present disclosure will now be described in detail below with reference to the accompanying drawings showing embodiments thereof. Configurations described in the following embodiments are given only by way of example, and are by no means intended to limit the scope of the present disclosure. For example, components of the configurations of the present disclosure can be replaced with desired components which can exhibit the same function. Further, desired components can be added. Further, two or more desired components (features) of the embodiments can be combined.

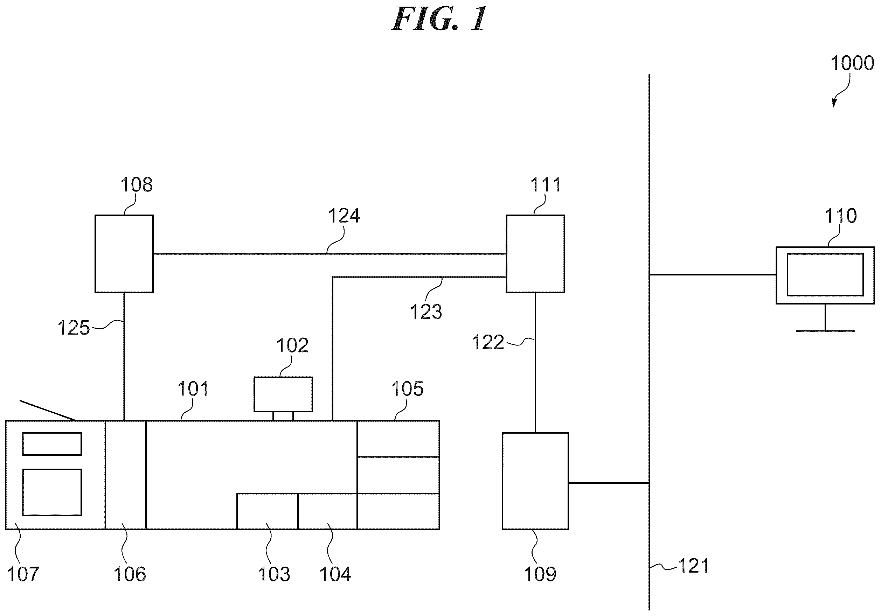

Hereafter, the first embodiment will be described with reference to FIGS. 1 to 11. FIG. 1 is a schematic diagram showing a whole configuration of an inspection system according to the first embodiment. The inspection system, denoted by reference numeral 1000, shown in FIG. 1 performs inspection of a print product. The print product is not particularly limited, but can be a print product having a plurality of pages, a single sheet print product, or the like. The inspection system includes an image forming apparatus 101, an inspection unit 106, a large-capacity stacker 107, an inspection device 108, an information processing apparatus 109, a client PC 110, and a reference image generation device 111. The information processing apparatus 109 and the client PC 110 are communicably connected via a network 121 The information processing apparatus 109 and the reference image generation device 111 are communicably connected via a network 122. The image forming apparatus 101 and the reference image generation device 111 are communicably connected via a network 123. The inspection device 108 and the reference image generation device 111 are communicably connected via a network 124. The inspection device 108 and the inspection unit 106 are communicably connected via a communication cable 125. Note that the client PC 110, the information processing apparatus 109, and the inspection device 108 can be communicably connected to the image forming apparatus 101 via communication cables. The image forming apparatus 101 includes a UI panel 102, a sheet feeding deck 103, a sheet feeding deck 104, and an option deck 105. The UI panel 102 has a function of receiving a user operation and a function of displaying a screen. The sheet feeding deck 103 and the sheet feeding deck 104 accommodate printing sheets (hereinafter sometimes simply referred to as sheets). The option deck 105 has three tires of sheet feeding decks for accommodating printing sheets on each deck. The image forming apparatus 101 performs printout based on a variety of input data, including print data, which is transmitted from the client PC 110 and the information processing apparatus 109. The image forming apparatus 101 is not particularly limited, but a multi-function peripheral (MFP) can be used, for example. Further, the image forming apparatus 101 can incorporate a finisher capable of performing stapling, a folding device, a bookbinding device, and/or the like.

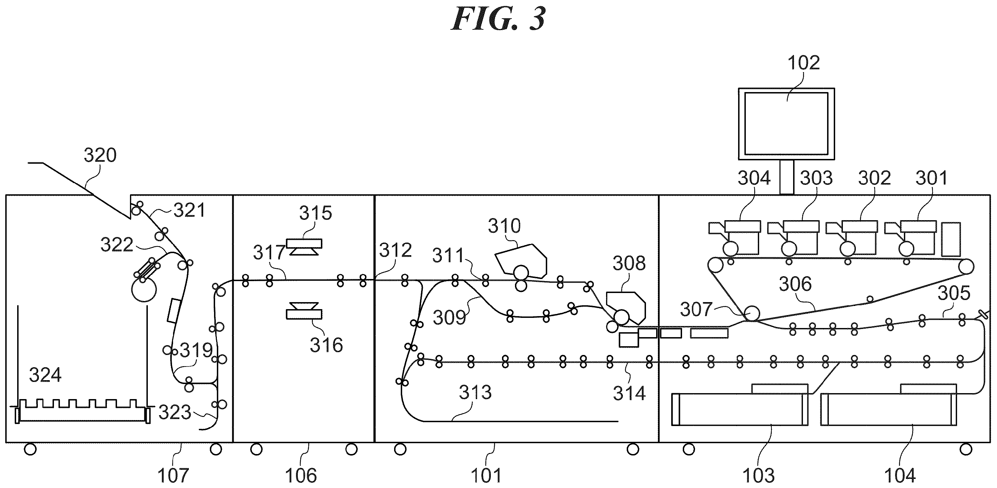

The image forming apparatus 101 incorporates the inspection unit 106 and the large-capacity stacker 107, which are communicably connected to each other via a communication cable as an internal bus. The inspection unit 106 receives a print product delivered from the image forming apparatus 101. Then, the inspection unit 106 acquires image data for performing inspection on the print product as to whether the print product includes an abnormal image. The abnormal image refers to an image which lowers the quality of a print product. The abnormal image is not particularly limited, and as an example thereof, there can be mentioned, for example, an abnormal image (spot) having a rounded shape and generated by attachment of a color material at an unintended location, and an abnormal image (streak), which is generated by insufficient attachment of a color material at an intended location, causing a color loss error. Image data acquired by the inspection unit 106 is transferred to the inspection device 108 via the communication cable 125. The inspection device 108 inspects, based on image data from the inspection unit 106, whether or not the print product includes an abnormal image. A result of this inspection is transmitted to the inspection unit 106. Note that although in the present embodiment, this inspection is performed by the inspection device 108, this is not limitative, but the inspection can be performed by an inline inspection device that performs processing including image generation, inspection, posterior processing, up to sheet discharge, in one sequence. The large-capacity stacker 107 includes a main tray 324 (see FIG. 3), and a top tray 320 (see FIG. 3). The main tray 324 can stack thousands of print sheets. Further, the large-stack stacker 107 is capable of receiving an output sheet inspected by the inspection unit 106 and switching a discharge destination of the output sheet, based on the result of the inspection.

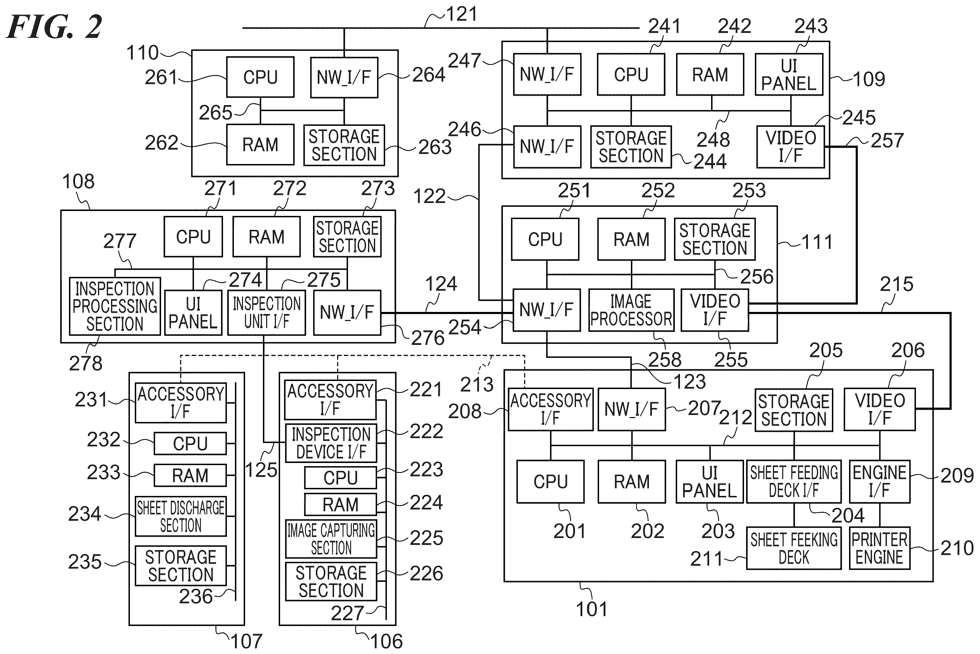

The reference image generation device 111 generates a reference image (reference image data), based on a RIP image received from the information processing apparatus 109. Further, the reference image generation device 111 has a function of receiving image data from the information processing apparatus 109 via a video cable 257 (see FIG. 2), and a function (branching function) of transmitting image data to the image forming apparatus 101 via a video cable 215. The branching function branches the transmission destination of image data to two transmission destinations. One (hereinafter referred to as "the first transmission destination") of the two transmission destinations is a data controller 421 (data acquisition unit) of the image forming apparatus 101. Further, the other transmission destination (hereinafter referred to as "the second transmission destination") is an image processor 258 (data acquisition unit) of the reference image generation device 111. The first transmission destination and the second transmission destination are both capable of acquiring image data. The client PC 110 generates a print job. The print job is transmitted to the information processing apparatus 109 via the network 121 so as to be managed by the information processing apparatus 109. Then, the print job is transmitted from the information processing apparatus 109 to the image forming apparatus 101 sequentially via the network 122, the reference image generation device 111, and the network 123. The image forming apparatus 101 performs processing related to printing on a sheet, based on the print job. Note that the print job can be generated by the information processing apparatus 109 and thereafter managed by the image forming apparatus 101.

FIG. 2 is a block diagram showing hardware configurations of the image forming apparatus 101, the inspection unit 106, the large-capacity stacker 107, the inspection device 108, the information processing apparatus 109, the client PC 110, and the reference image generation device 111. As shown in FIG. 2, the image forming apparatus 101 includes a CPU 201, a random access memory (RAM) 202, a UI panel (notification unit) 203, a sheet feeding deck interface (I/F) 204, and a storage section 205. Further, the image forming apparatus 101 includes a video I/F 206, a network interface (NW_I/F) 207, an accessory I/F 208, an engine I/F 209, a sheet feeding deck 211, and a printer engine (printing unit) 210. These hardware units of the image forming apparatus 101 are communicably connected to each other via a system bus 212. The CPU 201 performs control and calculation for the sections of the image forming apparatus 101. The CPU 201 execute programs stored in the storage section 205 and loaded into the RAM 202. The programs include, for example, a control program that causes a computer to execute a method of controlling the inspection system 1000. Note that the control program is not limitatively stored in the image forming apparatus 101, but can be stored in a different apparatus than the image forming apparatus 101, or can be distributedly stored in a plurality of apparatuses. The RAM 202 is a type of a volatile storage device directly accessible from the CPU 201. Further, the RAM 202 is used as a work area of the CPU 201 and another temporary data storage area. The storage section 205 functions as a temporary storage area and a work memory during operation of the image forming apparatus 101.

The engine I/F 209 performs communication with the printer engine 210 and control thereof. The sheet feeding deck I/F 204 performs communication with the sheet feeding deck 211 and control thereof. The sheet feeding deck 211 is comprised of the sheet feeding deck 103 (see FIG. 3), the sheet feeding deck 104 (see FIG. 3), and the option deck 105 (see FIG. 3). The UI panel 203 is included in the UI panel 102 and is used for an overall operation of the image forming apparatus 101. In the present embodiment, the UI panel 203 includes a capacitive touch panel. The NW_I/F 207 is connected to a NW_I/F 254 of the reference image generation device 111 via the network 122, for communication between the reference image generation device 111 and the image forming apparatus 101. Further, the NW_I/F 207 is connected to a NW_I/F 246 of the information processing apparatus 109 via the network 123 and the network 122, for communication between the information processing apparatus 109 and the image forming apparatus 101. Further, the NW_I/F 207 is connected to a NW_I/F 276 of the inspection device 108 via the network 123 and the network 124, for communication between the inspection device 108 and the image forming apparatus 101. Note that, although, in the present embodiment, the respective interfaces connected to the system bus 212 and the system bus 248 are directly connected to each other, this is not limitative, but, for example, the information processing apparatus 109 and the image forming apparatus 101 can be connected to each other via a network or the like.

The video I/F 206 is connected via the video cable 215 to a video I/F 255 of the reference image generation device 111, for image data communication between the image forming apparatus 101 and the reference image generation device 111. Note that an interface of the information processing apparatus 109 for connection with the reference image generation device 111 can be an interface having the functions of the NW_I/F 246 and a video I/F 245. Further, an interface of the image forming apparatus 101 for connection with the reference image generation device 111 can be an interface having the functions of the NW_I/F 207 and the video I/F 206. Further, an interface of the reference image generation device 111 for connection with the information processing apparatus 109 and the image forming apparatus 101 can be an interface having the functions of the NW_I/F 254 and the video I/F 255. The accessory I/F 208 is connected to an accessory I/F 221 of the inspection unit 106 and an accessory I/F 231 of the large-capacity stacker 107 via a cable 213.

The inspection unit 106 includes the accessory I/F 221, an inspection device I/F 222, a CPU 223, a RAM 224, an image capturing section (reading unit) 225, and a storage section 226. These hardware units of the inspection unit 106 communicably connected to each other via a system bus 227. The CPU 223 loads a program stored in the storage section 226 into the RAM 224. Then, the CPU 223 causes the program to operate to thereby perform control and operation of units inside the inspection unit 106. The RAM 224 is a type of a volatile storage device directly accessible from the CPU 223. Further, the RAM 224 is used as a work area of the CPU 223 and another temporary data storage area. The storage section 226 functions as a temporary storage area and a work memory during operation of the inspection unit 106. The inspection device I/F 222 is connected to an inspection unit I/F 275 of the inspection device 108 via the communication cable 125. The image capturing section 225 has an image capturing function of a conduct image sensor (CIS) installed therein. The image capturing section 225 captures an image of a printing sheet passing through the inspection unit 106. The captured image is transmitted to the inspection device 108 via the inspection device I/F 222. The purpose of transmitting the captured image is for inspection of a print product by the inspection device 108. Note that the image capturing section 225 can use another type of a sensor, such as a charge coupled device (CCD) image sensor, in place of the CIS.

The large-capacity stacker 107 includes the accessory I/F 231, a CPU 232, a RAM 233, a sheet discharge section 234, and a storage section 235, and these hardware units of the hardware are connected to each other via a system bus 236. The CPU 232 loads a program stored in the storage section 235 into the RAM 233. Then, the CPU 232 causes the program to operate to thereby perform control and operation of each unit in the large-capacity stacker 107. The RAM 233 is a type of a volatile storage device directly accessible from the CPU 232. Further, the RAM 233 is used as a work area of the CPU 232 or another temporary data storage area. The storage section 235 functions as a temporary storage area and a work memory during operation of the large-capacity stacker 107. The sheet discharge section 234 performs control of discharging sheets to the main tray 324 and the top tray 320, and monitoring states of stacked sheets on the main tray 324 and the top tray 320.

The inspection device 108 includes a CPU 271, a RAM (storage medium) 272, a storage section 273, and a UI panel (notification unit) 274. Further, the inspection device 108 includes the inspection unit I/F 275, the NW_I/F 276, and an inspection processing section 278. These hardware units of the inspection device 108 are communicably connected to each other via a system bus 277. The CPU 271 loads a program stored in the storage section 273 into the RAM 272. Then, the CPU 271 causes the program to operate to thereby perform control and operation of each unit in the inspection device 108. The RAM 272 is a type of a volatile storage device directly accessible from the CPU 271. Further, the RAM 272 is used as a work area of the CPU 271 or another temporary data storage area. Further, the storage section 273 functions as a temporary storage area and a work memory during operation of the inspection device 108. The UI panel 274 includes a liquid crystal display, and receives a user operation performed on the inspection device 108, or alternatively displays a status of the inspection device 108. The NW_I/F 276 is connected to the NW_I/F 254 of the reference image generation device 111 via the network 124, to thereby perform communication between the reference image generation device 111 and the inspection device 108. The inspection processing section 278 inspects whether or not a print product has a defect.

The information processing apparatus 109 includes a CPU 241, a RAM 242, a UI panel 243, a storage section 244, the video I/F 245, the NW_I/F 246, and a NW_I/F 247, and these hardware units communicably connected to each other via a system bus 248. The CPU 241 loads a program stored in the storage section 244 into the RAM 242. Then, the CPU 241 causes the program to operate to thereby perform control and operation of each unit in the information processing apparatus 109. The RAM 242 is a type of a volatile storage device directly accessible from the CPU 241. Further, the RAM 242 is used as a work area of the CPU 241 or another temporary data storage area. The storage section 244 functions as a temporary storage area and a work memory during operation of the information processing apparatus 109. The NW_I/F 247 is connected to a NW_I/F 264 of the client PC 110 via the network 121. Further, the NW_I/F 247 receives instructions for sheet generation and execution of a print job via the UI panel 243. The video I/F 245 is connected to the video I/F 255 via the video cable 257 to perform communication of image data between the information processing apparatus 109 and the reference image generation device 111.

The client PC 110 includes a CPU 261, a RAM 262, a storage section 263, and the NW_I/F 264, and these hardware units are connected to each other via a system bus 265. The CPU 261 loads a program stored in the storage section 263 into the RAM 262. Then, the CPU 261 causes the program to operate to thereby perform control and operation of each unit in the client PC 110. The RAM 262 is a type of a volatile storage device directly accessible from the CPU 261. Further, the RAM 262 is used as a work area of the CPU 261 or another temporary data storage area. The storage section 263 functions as the temporary storage area and the work area during operation of the client PC 110.

The reference image generation device 111 includes a CPU 251, a RAM (storage medium) 252, a storage section 253, the NW_I/F 254, the video I/F 255, and the image processor 258, and these hardware units are connected to each other via a system bus 256. The CPU 251 loads a program stored in the storage section 253 into the RAM 252. Then, the CPU 251 causes the program to operate to thereby perform control and operation of each unit in the reference image generation device 111. The RAM 252 is a type of a volatile storage device directly accessible from the CPU 251. Further, the RAM 252 is used as a work area of the CPU 251 or another temporary data storage area. The storage section 253 functions as a temporary storage area and a work memory during operation of the reference image generation device 111. The image processor 258 generates a reference image. Further, the image processor 258 stores the reference image in the RAM 252.

FIG. 3 is a schematic diagram showing internal configurations of the image forming apparatus 101, the inspection unit 106, and the large-capacity stacker 107. Referring to FIG. 3, the image forming apparatus 101 has the sheet feeding deck 103 and the sheet feeding deck 104 incorporated therein. In each of the sheet feeding deck 103 and the sheet feeding deck 104, an uppermost sheet of print sheets accommodated therein is separated and fed to a sheet conveying path 305. Further, the image forming apparatus 101 includes development stations 301 to 304, an intermediate transfer belt 306, and a fixing unit 308. The development station 301 forms a toner image by using a yellow (Y) color. The development station 302 forms a toner image by using a magenta (M) color. The development station 303 forms a toner image by using a cyan (C) color. The development station 304 forms a toner image by using a black (K) color. Each toner image is primarily transferred to the intermediate transfer belt 306. The intermediate transfer belt 306 rotates in a clockwise direction in FIG. 3. Each toner image on the intermediate transfer belt 306 is transferred to a printing sheet conveyed from the sheet conveying path 305, at a secondary transfer position 307.

The fixing unit 308 includes a pressure roller and a heating roller, and as a printing sheet passes between these rollers, toners on the printing sheet can be molten and pressure-fixed to the printing sheet. This makes it possible to fix a toner image to the printing sheet. The printing sheet having passed through the fixing unit 308 passes through the sheet feeding path 309 to be conveyed to a sheet feeding path 312. Note that, depending on a printing sheet, further fixture of the toner image is sometimes required. In this case, the printing sheet having passed through the fixing unit 308 is conveyed to a second fixing unit 310. The second fixing unit 310 can additionally perform melting and pressure fixing. Thereafter, the printing sheet passes through a sheet feeding path 311 to be conveyed to the sheet conveying path 312. Further, in a case where printing is performed on both sides of a printing sheet, the printing sheet having passed through the fixing unit 308 is conveyed to a sheet inversion pass 313 to be inverted upside down. Then, the printing sheet is conveyed to a double-sided printing conveying path 314 to perform transfer of a toner image to a back side of the printing sheet at the secondary transfer position 307.

The inspection unit 106 includes a CIS 315 and a CIS 316 arranged opposed to each other. The CIS 315 is a sensor for reading an image on a front side of a printing sheet. The CIS 316 is a sensor for reading an image on a back side of the printing sheet. The inspection unit 106 performs scanning (reading) of a printing sheet by using the CIS 315 and the CIS 316 at a time when the printing sheet conveyed into a sheet conveying path 317 reaches a predetermined position. The scanned image is transmitted to the inspection device 108 via the inspection device I/F 215 and the accessory I/F 231. The inspection device 108 determines whether or not the scanned image has a defect. A result of the determination is transmitted to the inspection unit 106 via the inspection device I/F 275 and the accessory I/F 221. The CPU 223 transmits the result of the determination to the large-capacity stacker 107 via the accessory I/F 221 and the accessory I/F 231.

The large-capacity stacker 107 includes the main tray 324 as a tray for stacking printing sheets. A printing sheet having passed through the inspection unit 106 is conveyed along a sheet conveying path 319 in the large-capacity stacker 107. The print sheet passes through a sheet conveying path 322 to be stacked on the main tray 324. Further, the large-capacity stacker 107 includes the top tray 320 as a discharge tray. The print sheet (print product) having a defect detected by the inspection device 108 is discharged to the top tray 320. In a case where the printing sheet is output to the top tray 320, the printing sheet is conveyed to the top tray 320 from the sheet conveying path 319 to the top tray 320 via a sheet conveying path 321. The large-capacity stacker 107 includes an inversion section 323 for inverting the printing sheet. The inversion section 323 is used for stacking printing sheets on the main tray 324. By inversion of a printing sheet at the inversion section 323, it is possible to make the stacking order and the face direction of printing sheets stacked on the main tray 324 same as those of pages to be printed in the main tray 324.

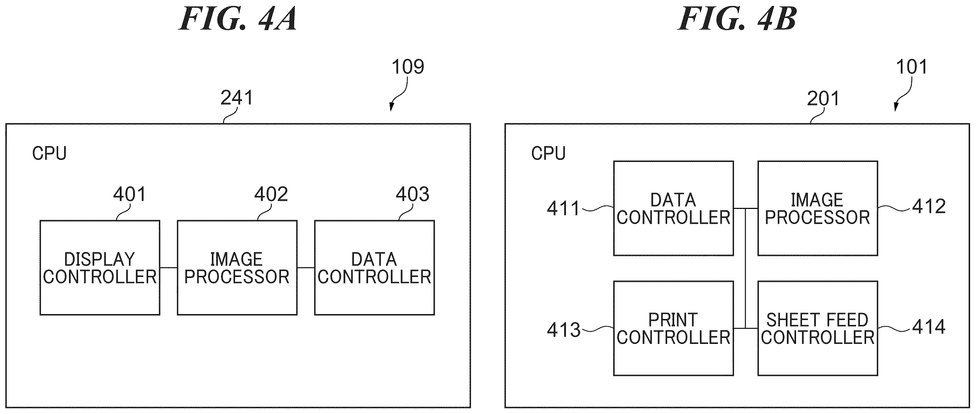

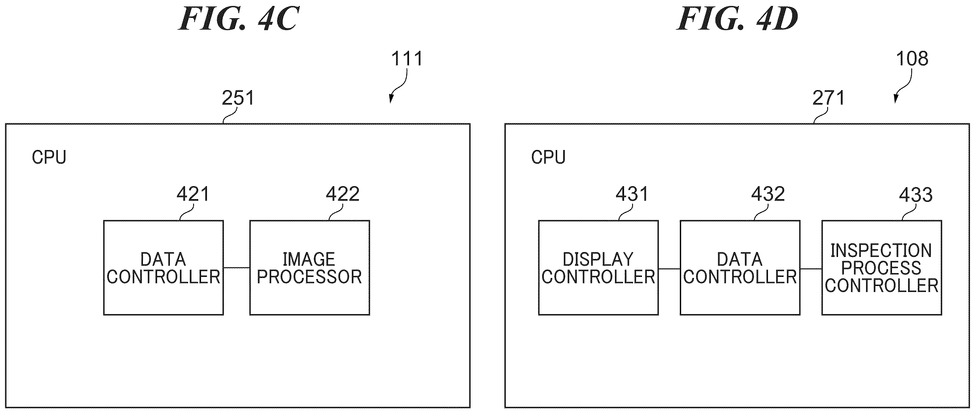

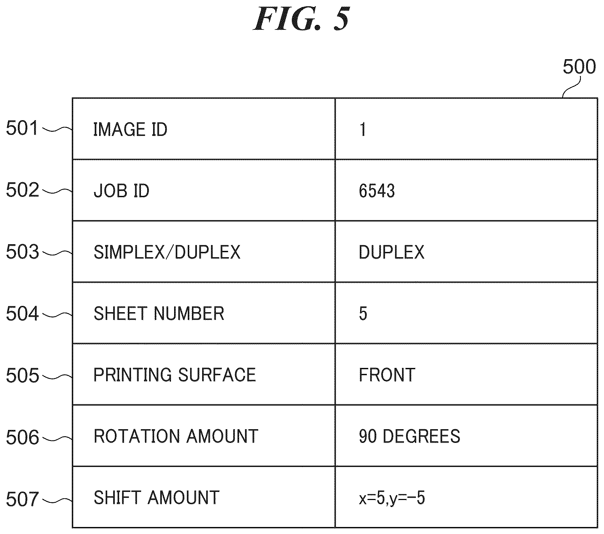

FIGS. 4A to 4D are block diagrams showing respective functional configurations of CPUs 241, 201, 251, and 271 of the information processing apparatus 109, the image forming apparatus 101, the reference image generation device 111, and the inspection device 108. FIG. 4A is a block diagram showing a functional configuration of the CPU 241 of the information processing apparatus 109. FIG. 4B is a block diagram showing a functional configuration of the CPU 201 of the image forming apparatus 101. FIG. 4C is a block diagram showing a functional configuration of the CPU 251 of the reference image generation device 111. FIG. 4D is a block diagram showing a functional configuration of the CPU 271 of the inspection device 108. FIG. 5 is a diagram showing an example of information related to image allocation. As shown in FIG. 4A, the CPU 241 of the information processing apparatus 109 includes a display controller 401, an image processing controller 402, and a data controller 403. The display controller 401 displays a screen operable by a user or the like on the UI panel 243. Further, in a case where settings of a print job are made on a screen displayed on the UI panel 243, the display controller 401 stores (records) print settings information in the RAM 242. Further, in a case where printing is executed, the display controller 401 transmits information that printing is executed to the data controller 403.

The image processing controller 402 performs image processing. In a case where information that printing is executed is received, the image processing controller 402 (RIP processing execution unit) performs RIP processing for converting print data or document data to bit map image data, based on the print settings information stored in the RAM 242. The RIP processing generates an image having a resolution of 600 dpi or 1200 dpi set thereto. Further, the RIP processing executes in the first processing or the second processing described hereinafter. The image processing controller 402 adds a unique image ID to a RIP image according to a printing order. For example, a RIP image to be printed on a first printing sheet is given an image ID of "1", and a RIP image to be printed on a second printing sheet is given an image ID of "2". The data controller 403 performs reception control of a print job from the client PC 110, and transmission control of the print job to the image forming apparatus 101 and the reference image generation device 111. Note that the data controller 403 can perform transmission control of the print job to the inspection device 108. The data controller 403 receives a print job from the client PC 110 via the NW_I/F 247 to store the same in the RAM 242. Further, the data controller 403 transmits a print job start notification and a RIP image to the reference image generation device 111 via the NW_I/F 246 and the video I/F 245. Further, the data controller 403 transmits the print job start notification and the print settings information to the image forming apparatus 101 via the NW_I/F 246. Further, the data controller 403 acquires an inspection job ID from the image forming apparatus 101 to store the same in the RAM 242.

Referring to FIG. 4B, the CPU 201 of the image forming apparatus 101 includes a data controller 411, an image processing controller 412, a print controller 413, and a sheet feed controller 414. The data controller 411 performs reception control of a print job and a notification from the information processing apparatus 109, and transmission control of job information and reference image information to the inspection device 108. Further, the data controller 411 performs transmission control of an image transfer start notification to the reference image generation device 111. In a case where a print job start notification is received from the information processing apparatus 109, the data controller 411 stores the print settings information and the RIP image acquired via the NW_I/F 207 and the video I/F 206 in the RAM 202. Further, in the inspection job, the reference image information and image allocation information 500 are transmitted to the inspection device 108 via the NW_I/F 207. When registering a reference image, reference image information is generated based on the print settings information on a page-by-page basis. The reference image information includes an inspection job ID, an image ID, and so forth. The reference image information is transmitted to the inspection device 108. Further, the reference image information includes information on whether the printing sheet is the last page of the print job. The image allocation information 500 includes simplex/duplex information based on the print settings information, i.e. whether or not simplex printing or duplex printing is to be performed. Further, the image allocation information 500 includes a rotation amount, a shift amount, and further, a printing surface, i.e. information on whether printing is to be performed on a front side or a back side, a sheet number (page number), and so forth.

The image allocation information 500 shown in FIG. 5 is generated on a page-by-page basis. The image allocation information 500 includes, as print information concerning a printing condition, first information 501, second information 502, third information 503, fourth information 504, fifth information 505, sixth information 506, and seventh information 507. The first information 501 is an image ID for identifying an image, and is set to "1" in FIG. 5. The second information 502 is a job ID for identifying an inspection job, and is set to "6543" in FIG. 5. The third information 503 is information concerning whether simplex printing or duplex printing is to be performed, and is set to "duplex" in FIG. 5. This information is determined based on the print settings information set by the display controller 401. The fourth information 504 is a sheet number, i.e. a page number of a sheet (printing sheet) instructed by the sheet feed controller 414 for conveyance, and is set to "5" in FIG. 5. The fifth information 505 is information concerning whether printing is to be performed on a front side or a back side, and is set to "front side" in FIG. 5. The sixth information 506 is information concerning a rotation amount determined based on the print settings information, and is set to "90 degrees" in FIG. 5. In a case where the rotation amount is e.g. 90 degrees, imposition is performed by rotating a RIP image from the information processing apparatus 109 clockwise through 90 degrees relative to the printing sheet being conveyed, for printing. The seventh information 507 is information concerning a shift amount determined based on the print settings information, and is set to "x = 5, y = -5" in FIG. 5. In a case where the shift amount is set to x = 5 and y = -5, by setting the left end corner of the leading end of the printing sheet being conveyed as an origin, the printing sheet is shifted in the main scanning direction by +5 pixels and in the sub scanning direction by -5 pixels, whereby printing is performed after imposing the RIP image from the information processing apparatus 109. Further, the image allocation information 500 can include information concerning whether or not the printing sheet is the last page of the print job.

The image processing controller 412 acquires the print processing information and the RIP image stored in the RAM 202 to thereby perform image processing for converting the RIP image into print data. The image processing for conversion into print data is, for example, processing of performing rasterization of page description language (PDL) data for conversion into multi-valued bitmap data and then perform screen processing and the like. This converts the bitmap data into binary bitmap data. The binary bitmap data is transmitted to the printer engine 210 via the engine I/F 209. The print controller 413 performs control of the printer engine 210 via the engine I/F 209. The print controller 413 performs instruction for printing bitmap data from the image processing controller 412 on a printing sheet. The sheet feeder controller 414 performs control of the sheet feeding deck 211 via the sheet feeding deck I/F 204. The sheet feed controller 414 conveys a printing sheet from the sheet feeding deck 211 to the printer engine 210 based on the print processing information stored in the RAM 202.

Referring to FIG. 4C, the CPU 251 of the reference image generation device 111 includes the data controller 421 and an image processing controller 422. The data controller 421 performs reception control of an image transfer start notification from the image forming apparatus 101 and transmission control of reference image data to the inspection device 108. The data controller 421 receives the image transfer start notification from the image forming apparatus 101 via the NW_I/F 254 and stores the same in the RAM 252. Further, the data controller 421 receives the RIP image from the information processing apparatus 109 via the video I/F 255 and stores the same in the RAM 252. Further, the data controller 421 transmits the reference image data to the inspection device 108 via the NW_I/F 254. The image processing controller 422 performs control of the image processor 258. The image processor 422 gives an instruction for generating the reference image having a resolution converted to 300 dpi, based on the RIP image data stored in the RAM 252 and image transfer start information.

Referring to FIG. 4D, the CPU 271 of the inspection device 108 includes a display controller 431, a data controller 432, and an inspection process controller 433. The display controller 431 displays a screen operable by a user, an inspection result of a print product, and the like, on the UI panel 274. Further, in a case where settings of inspection operation are made on a screen displayed on the UI panel 274, the display controller 431 stores inspection setting information in the RAM 272. The data controller 432 receives the reference image information and the image allocation information 500 from the image forming apparatus 101 via the NW_I/F 276, and stores the same in the RAM 272. In a case where a notification of the start of an inspection job is received, the data controller 432 performs generation of an inspection job ID unique to the inspection job and stores the inspection job ID in the RAM 272. Further, the data controller 432 stores a reference image acquired via the communication I/F 276 in the RAM 272. Further, the data controller 432 notifies an inspection result by the inspection process controller 433, inspection setting information stored in the RAM 272, and so forth, to the inspection unit 106. The inspection process controller 433 controls the inspection processing section 278.

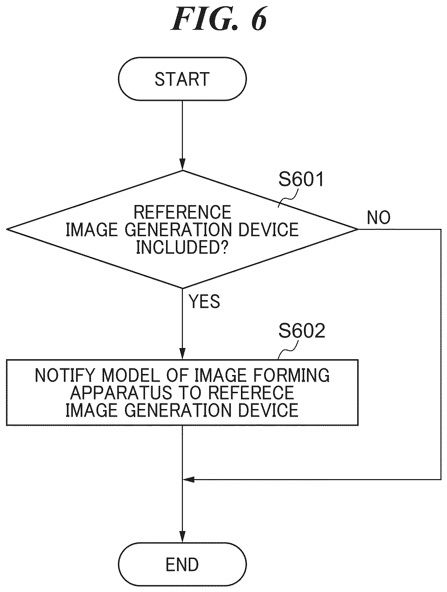

FIG. 6 is a flowchart of a process (communication determination process for the reference image generation device 111) performed by the image forming apparatus 101. A program of the process in FIG. 6 is stored in the storage section 205 of the image forming apparatus 101 and is executed by the CPU 201. Further, this program is started when the image forming apparatus 101 is started up. Referring to FIG. 6, in a step S601, the CPU 201 of the image forming apparatus 101 determines whether or not the reference image generation device 111 is included in the inspection system 1000. If it is determined in the step S601 that the reference image generation device 111 is included, the process proceeds to a step S602. On the other hand, if it is determined that the reference image generation device 111 is not included, the present process is terminated.

In the step S602, the CPU 201 notifies information concerning a model of the image forming apparatus 101 to the reference image generation device 111 via the NW_I/F 207. The information concerning a model of the image forming apparatus 101 is a value representing the model of the image forming apparatus 101, which is stored in the storage section 205. After execution of the step S602, the present process is terminated. Further, upon receipt of the information concerning the model of the image forming apparatus 101, the reference image generation device 111 stores the information in the storage section 253. Then, the reference image generation device 111 makes settings according to the model of the image forming apparatus 101. After making the settings, the CPU 251 of the reference image generation device 111 notifies to the information processing apparatus 109 via the video I/F 255 information that the reference image generation device 111 is in a state capable of receiving a job.

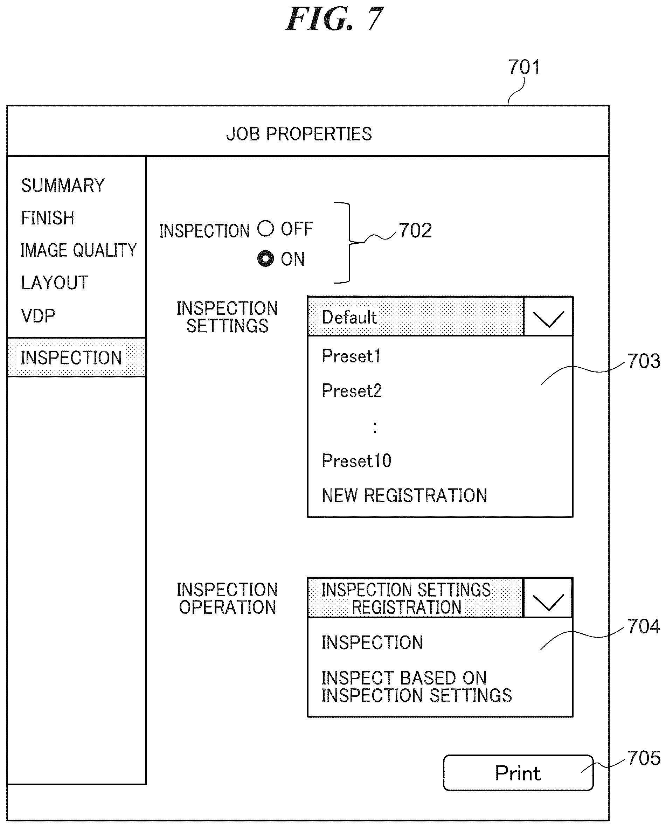

FIG. 7 is a diagram showing a screen for a user to perform operations for specifying an inspection mode based on job properties of the information processing apparatus 109. The screen shown in FIG. 7, i.e. a job properties screen 701, is stored in the storage section 244 of the information processing apparatus 109. In a case where a user instructs setting an inspection mode by operating the UI panel 243, the job properties screen 701 is displayed on the UI panel 243 by the display controller 401. The job properties screen 701 includes regions 702 to 704 and a button 705. The region 702 is for specifying whether or not to execute inspection by the inspection device 108. In a case where execution of inspection is specified in the region 702, i.e. inspection ON is selected, the data controller 403 transmits a notification of the start of an inspection job to which settings in the region 703 and the region 704 are added, to the image forming apparatus 101, and acquires the inspection job ID. Then, after acquiring the inspection job ID, the inspection job ID is set in the print job, and the resulting print job is transmitted to the image forming apparatus 101. The region 703 is for selecting a region wherein inspection is to be performed and a level of the inspection. For example, in a case where "Default" is selected, the inspection device 108 performs inspection on the entirety of an image to be inspected at a standard level. In a case where any of "Preset 1" to "Preset 10" is selected, the inspection device 108 performs inspection on a region specified in advance and at a level specified in advance. In a case where "New registration" is selected, this enables creation of new inspection settings. In this case, the inspection device 108 performs inspection based on the new inspection settings. The region 704 is for specifying an inspection operation. The inspection operation is not particularly limited, but, it can be any of execution of only inspection setting registration, execution of only inspection, execution of inspection based on the specified inspection settings, and so forth. Then, by pressing the button 705 in a state in which selections have been made on the regions 702 to 704, the data controller 403 transmits the print job to the image forming apparatus 101.

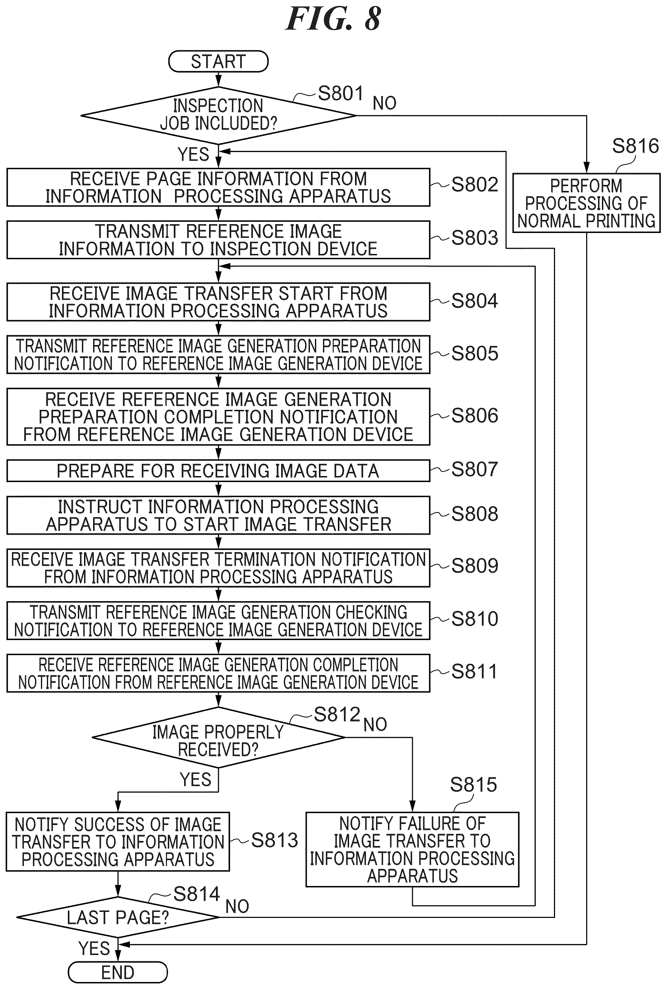

FIG. 8 is a flowchart of a job process performed by the image forming apparatus 101. A program of the job process shown in FIG. 8 is stored in the storage section 205 of the image forming apparatus 101, and is executed by the data controller 411. This program is started when the data controller 411 of the image forming apparatus 101 has received a print job. Referring to FIG. 8, in a step S801, the data controller 411 determines whether or not the print job includes an inspection job. This determination is performed based on whether the print job has an inspection job ID set therein. In a case where the print job has an inspection job ID set therein, it is determined that the print job is an inspection job, and the process proceeds to a step S802. On the other hand, in a case where the print job does not have an inspection job ID set therein, it is determined that the print job is not an inspection job, and the process proceeds to a step S816.

In the step S802, the data controller 411 receives page information from the information processing apparatus 109. The page information includes, e.g. the number of pixels in a sheet, an image ID, the current copy number, and so forth. The data controller 411 stores the page information in the RAM 202.

In a step S803, the data controller 411 transmits the reference image information to the inspection device 108.

In a step S804, the data controller 411 receives an image transfer start from the information processing apparatus 109.

In a step S805, the data controller 411 reads an inspection job ID, an image ID, the number of pixels, a resolution of an image of the job, which are stored in the RAM 202, and the read pieces of information are transmitted as a reference image generation preparation notification to the reference image generation device 111.

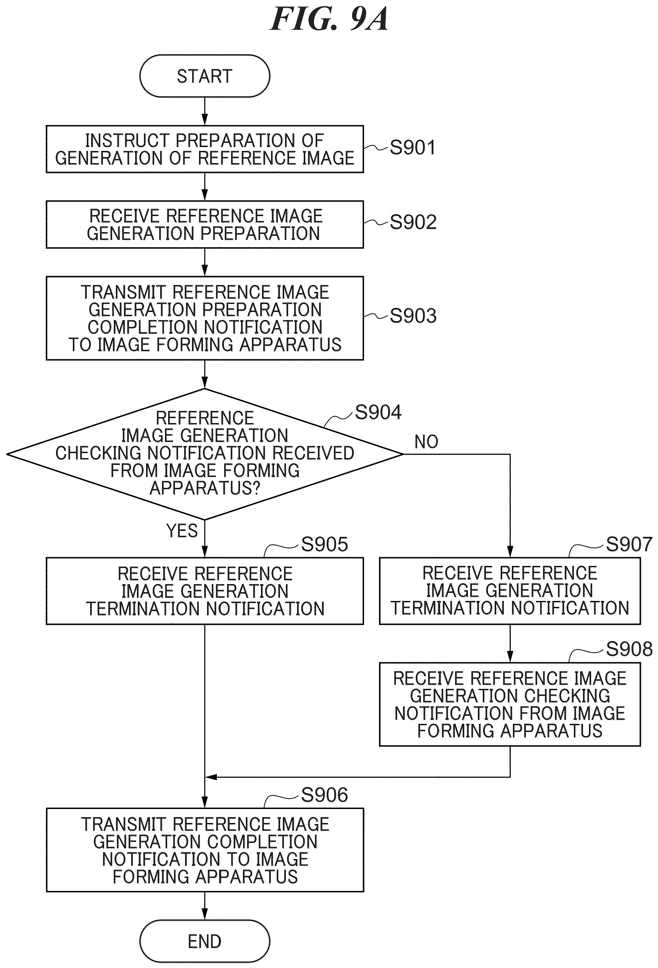

In a step S806, the data controller 411 receives a reference image generation preparation completion notification (see a step S903 in FIG. 9A) from the reference image generation device 111.

In a step S807, the data controller 411 instructs the image processing controller 412 to prepare for receiving image data.

In a step S808, in a case where the reference image generation device 111 has been made ready for receiving an image and the image forming apparatus 101 has been made ready for receiving an image, the data controller 411 instructs the information processing apparatus 109 to start transfer of the image. In a case where the start of transfer of the image is instructed, the information processing apparatus 109 transmits a RIP image to the reference image generation device 111 via the video I/F 245. The RIP image is transmitted to the image forming apparatus 101 as well, by the branching function of the reference image generation device 111.

In a step S809, the data controller 411 receives an image transfer termination notification from the information processing apparatus 109. The image transfer termination notification is a notification transmitted from the information processing apparatus 109 in a case where the transmission of the RIP image is terminated.

In a step S810, the data controller 411 transmits a reference image generation checking notification to the reference image generation device 111. The reference image generation checking notification is a notification for checking whether generation of the reference image by the reference image generation device 111 is terminated.

In a step S811, the data controller 411 receives a reference image generation completion notification (see a step S906) from the reference image generation device 111.

In a step S812, the data controller 411 determines whether or not the RIP image has been properly received via the video I/F 206. If it is determined in the step S812 that the RIP image has been properly received, the process proceeds to a step S813. Further, in this case, the RIP image is stored in the RAM 202. On the other hand, if it is determined in the step S812 that the RIP image has not been properly received, the process proceeds to a step S815. Further, in this case, due to a relatively large size of the image, the image is not stored in the RAM 202 even after compressing the image.

In the step S813, in a case where the reference image generation by the reference image generation device 111 is properly completed, and the reception of an image by the image forming apparatus 101 is properly completed, the data controller 411 notifies success of image transfer to the information processing apparatus 109.

In a step S814, the data controller 411 determines, based on sheet information stored in the RAM 202, whether or not the received image is the last page. If it is determined in the step S814 that the received image is the last page, the present process is terminated. On the other hand, if it is determined in the step S814 that the received image is not the last page, the process returns to the step S802, to sequentially execute the following steps.

In the step S815, the data controller 411 notifies failure of image transfer to the information processing apparatus 109. After execution of the step S815, the process returns to the step S804 to sequentially execute the following steps.

In the step S816, the data controller 411 executes normal printing.

FIG. 9A is a flowchart of a synchronization process performed by the reference image generation process 111 for synchronization with the image forming apparatus 101. A program of the synchronization process in FIG. 9A is started when the data controller 421 of the reference image generation device 111 receives the reference image generation preparation notification (see the step S805) from the image forming apparatus 101. Referring to FIG. 9A, in a step S901, the data controller 421 of the reference image generation device 111 instructs the image processing controller 422 to prepare for generation of an reference image. According to this instruction, the image processing controller 422 performs preparation for receiving the RIP image via the video I/F 255. In a case where this preparation is completed, the image processing controller 422 notifies the reference image generation preparation completion to the data controller 421.

In a step S902, the data controller 421 receives the reference image generation preparation completion notification from the image processing controller 422. Further, the data controller 421 stores information received by the reference image generation preparation notification in the RAM 252.

In the step S903, the data controller 421 notifies information that the reference image generation preparation is completed to the image forming apparatus 101. This notification corresponds to the step S806 of the job process in FIG. 8. After transmitting the reference image generation preparation completion notification, the RIP image is transmitted from the information processing apparatus 109. In a case where the RIP image is received, the image processing controller 422 starts generation of the reference image.

In a step S904, the data controller 421 determines whether or not the reference image generation checking notification (see the step S810) is received from the image forming apparatus 101. If it is determined in the step S904 that the reference image generation checking notification has been received, the process proceeds to a step S905. On the other hand, if it is in the step S904 that the reference image generation checking notification has not been received, the process proceeds to a step S907.

In the step S905, the data controller 421 receives the reference image generation termination notification from the image processing controller 422.

In the step S906, in a case where the reference image generation checking notification is received from the image forming apparatus 101, and the completion of generation of the reference image by the reference image generation device 111 is confirmed, the data controller 421 notifies the reference image generation completion notification to the image forming apparatus 101. This notification corresponds to the step S811 of the job process in FIG. 8. After execution of the step S906, the process is terminated.

In the step S907, the data controller 421 receives the reference image generation termination notification from the image processing controller 422. This step S907 is executed when the reference image generation termination notification is received before the reference image generation checking notification.

In a step S908, the data controller 421 receives the reference image generation checking notification (see the step S810) from the image forming apparatus 101. After execution of the step S908, the process proceeds to the step S906.

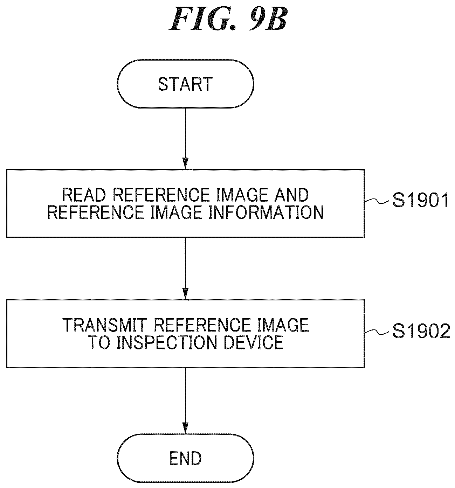

FIG. 9B is a flowchart of a reference image transmission process performed by the reference image generation device 111 for transmitting a reference image to the inspection device 108. The reference image transmission process in FIG. 9B is started when the data controller 421 has received a reference image compression completion notification from the image processing controller 422. Referring to FIG. 9B, in a step S1901, the data controller 421 of the reference image generation device 111 reads a reference image stored in the RAM 252 and the reference image information including the inspection job ID and the image ID.

In a step S1902, the data controller 421 adds the reference image information to a reference image read in the step S1901. Then, the data controller 421 transmits the reference image having the reference image information added thereto to the inspection device 108. After execution of the step S1902, the present process is terminated.

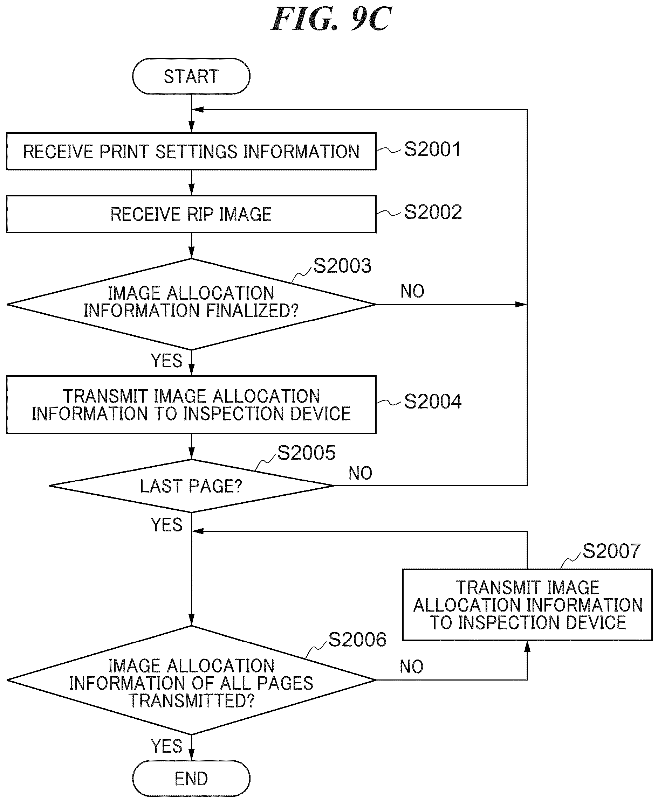

FIG. 9C is a flowchart of a transmission process performed by the image forming apparatus 101 for transmitting the image allocation information 500. The transmission process for transmitting the image allocation information 500 is started when the data controller 411 of the image forming apparatus 101 has received a print job. Referring to FIG. 9C, in a step S2001, the data controller 411 receives the print settings information from the information processing apparatus 109 and stores the received print settings information in the RAM 202.

In a step S2002, the data controller 411 receives a RIP image from the information processing apparatus 109 and stores the received RIP image in the RAM 202.

In a step S2003, the data controller 411 determines whether or not the image allocation information 500 has been finalized. This determination is performed, for example, based on whether or not all the items of the image allocation information 500 shown in FIG. 5 are complete. In a case where all the items of the image allocation information 500 are complete, it is determined that the image allocation information 500 has been finalized, and the process proceeds to a step S2004. On the other hand, in a case where all the items of the image allocation information 500 are incomplete, it is determined that the image allocation information 500 has not been finalized, and the process returns to the step S2001 to sequentially execute the following steps. All the items are incomplete, for example, in a case where a reverse order printing function of the image forming apparatus 101 is performed or in a like case. In the execution of the reverse order printing function, transmitted RIP images are not printed in the order of reception. Therefore, unless RIP images of all the pages of a print job have not been received, sheet numbers are not determined, and hence all the items of the image allocation information 500 are not complete.

In the step S2004, the data controller 411 transmits the image allocation information 500 to the inspection device 108.

In a step S2005, the data controller 411 determines whether or no the image allocation information 500 transmitted in the step S2004 is information concerning the last page. If it is determined in the step S2005 that the image allocation information 500 is information concerning the last page, the process proceeds to a step S2006. On the other hand, if it is determined in the step S2005 that the image allocation information 500 is not information concerning the last page, the process returns to the step S2001 to sequentially execute the following steps.

In the step S2006, the data controller 411 determines whether or not the image allocation information 500 of all the pages of the print job has been transmitted to the inspection device 108. If it is determined in the step S2006 that the image allocation information 500 of all the pages of the print job has been transmitted, the present process is terminated. On the other hand, if it is determined in the step S2006 that the image allocation information 500 of all the pages of the print job has not been transmitted, the present process proceeds to a step S2007.

In the step S2007, the data controller 411 transmits the image allocation information 500 of the next page to the inspection device 108.

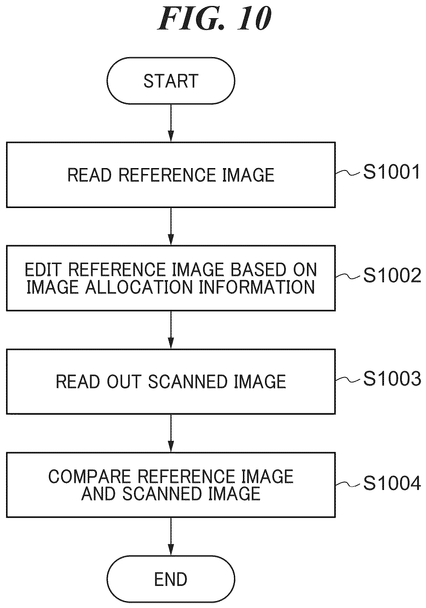

FIG. 10 is a flowchart of an inspection process performed by the inspection device 108. The inspection process in FIG. 10 is started when the image allocation information 500 is received (see the step S2004 or the step S2007 in FIG. 9C). Referring to FIG. 10, in a step S1001, the inspection process controller 433 reads, by referring to an inspection job ID and an image ID included in the image allocation information 500, a reference image associated with the inspection job ID and the image ID.

In a step S1002, the inspection process controller 433 of the inspection device 108 edits the reference image read in the step S1001 based on the image allocation information 500 stored in the RAM 272. This editing includes, for example, 90-degree rotation of a reference image, and shifting of a reference image in the main scanning direction by +5 pixels and in the sub scanning direction by -5 pixels with reference to the left end corner of the leading end of the printing sheet as the origin.

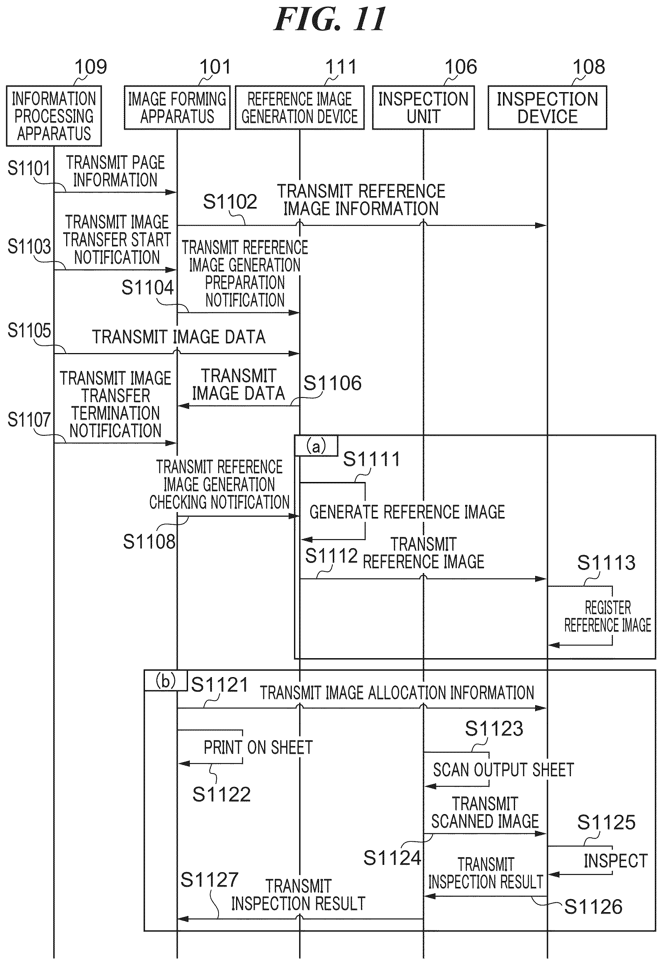

In a step S1003, the inspection process controller 433 reads out a scanned image (see a step S1124 in FIG. 11).

In a step S1004, the inspection process controller 433 performs inspection by comparing the reference image edited in the step S1002 and the scanned image read out in the step S1003. Specifically, first, feature points are extracted from the reference image and the scanned image. Then, based on the feature points, registration between the reference image and the scanned image is performed. Next, it is determined whether a difference between a pixel value (luminance value) of a pixel to be inspected in the scanned image and a pixel value (luminance value) of a pixel to be compared in the reference image is equal to or lower than a threshold value. As a result of this determination, if the difference is equal to or lower than the threshold value, the pixel to be inspected is determined to be passed. Note that the threshold value varies with an inspection level. Further, this inspection is performed based on each reference image corresponding to each scanned image. Then, when inspection on all the pixels is completed, it is determined whether or not the total number of pixels determined to be failed is equal to or smaller than a passing threshold value. Based on a result of this determination, it is determined whether or not the scanned image is normal. For example, if the total number of pixels determined to be failed is equal to or smaller than the passing threshold value, the scanned image can be determined to be normal. On the other hand, if the total number of pixels determined to be failed is larger than the passing threshold value, the scanned image can be determined to be not normal. Further, information on whether the print product has a defect, a type of the defect (e.g. a spot or a streak), position information of the defect, and so forth are stored in the RAM 272. After execution of the step S1004, the present process is terminated.

FIG. 11 is a sequence diagram of processing operation performed between the information processing apparatus 109, the image forming apparatus 101, the reference image generation device 111, the inspection unit 106, and the inspection device 108. Referring to FIG. 11, in a step S1101, the data controller 403 (CPU 241) of the information processing apparatus 109 transmits page information concerning a to-be-printed product as an image to be inspected to the image forming apparatus 101. The page information includes, for example, an image ID, the number of pixels of the image, and the like information. The data controller 411 of the image forming apparatus 101 receives the page information from the information processing apparatus 109. The page information is stored in the RAM 202 of the image forming apparatus 101.

In a step S1102, the data controller 411 (CPU 201) of the image forming apparatus 101 transmits reference image information concerning a to-be-printed product as an image to be inspected to the inspection device 108. The data controller 432 (CPU 271) of the inspection device 108 receives the reference image information from the image forming apparatus 101. The reference image information is stored in the RAM 272 of the inspection device 108.

In a step S1103, the data controller 403 of the information processing apparatus 109 transmits an image transfer start notification to the image forming apparatus 101. The data controller 411 of the image forming apparatus 101 receives the image transfer start notification from the information processing apparatus 109.

In a step S1104, the data controller 411 of the image forming apparatus 101 transmits a reference image generation preparation notification to the reference image generation device 111. The data controller 421 of the reference image generation device 111 receives the reference image generation preparation notification from the image forming apparatus 101.

In a step S1105, the data controller 403 of the information processing apparatus 109 transmits image data of the to-be-printed product as the image to be inspected to the reference image generation device 111. The image data is print data printed in the step S1122 to form a print product. The data controller 421 (CPU 251) of the reference image generation device 111 receives image data from the information processing apparatus 109. The image data is stored in the RAM 252 of the reference image generation device 111.

In a step S1106, the data controller 421 of the reference image generation device 111 transmits the image data to the image forming apparatus 101 by the branching function. The data controller 421 of the image forming apparatus 101 receives the image data from the reference image generation device 111.

In a step S1107, upon detection of completion of image data transmission in the step S1105, the data controller 403 of the information processing apparatus 109 transmits an image transfer termination notification to the image forming apparatus 101. The data controller 411 of the image forming apparatus 101 receives the image transfer termination notification from the information processing apparatus 109.

In a step S1108, the data controller 411 of the image forming apparatus 101 transmits a reference image generation checking notification to the reference image generation device 111. The data controller 421 of the reference image generation device 111 receives the reference image generation checking notification from the image forming apparatus 101.

In a step S1111, the image processor 258 of the reference image generation device 111 generates a reference image serving as a reference of inspection. The reference image is generated by performing predetermined processing (e.g. RIP processing and the like) on the same image as the image data transmitted from the image forming apparatus 101 in the step S1106. Further, the image processor 258 compresses the reference image and stores the compressed reference image into the RAM 252.

In a step S1112, the image processor 258 of the reference image generation device 111 transmits the reference image stored in the RAM 252 in the step S1111 to the inspection device 108.

In a step S1113, the data controller 432 of the inspection device 108 stores the reference image transmitted from the reference image generation device 111 into the RAM 272. At this time, the reference image is stored in a state associated with an inspection job ID and an image ID. Hereafter, the steps S1111 to S1113 (part of (a), which is enclosed by a rectangle in FIG. 11) is referred to as "first processing" in which the reference image is formed based on the image data).

In a step S1121, the data controller 411 of the image forming apparatus 101 transmits the image allocation information 500 to the inspection device 108, in a case where the image allocation information 500 is finalized. The data controller 432 of the inspection device 108 stores the image allocation information 500 from the image forming apparatus 101 into the RAM 272. Note that the step S1121 can be executed as soon as the image allocation information 500 is finalized, so long as it is after execution of the step S1106.

In the step S1122, the print controller 413 of the image forming apparatus 101 controls the printer engine 210 to thereby print image data received from the reference image generation device 111 in the step S1106 on a printing sheet (sheet). By this printing, a print product, i.e. a sheet having been subjected to printing is output (acquired).

In a step S1123, the CPU 223 of the inspection unit 106 controls the image capturing section 225 to thereby perform image capturing (scanning) on the print product output in the step S1122. This causes the print product to be read, whereby a scanned image (scanned image data) of the print product is acquired.

In the step S1124, the CPU 223 of the inspection unit 106 transmits the scanned image acquired in the step S1123 to the inspection device 108. The data controller 432 of the inspection device 108 receives the scanned image from the inspection unit 106. The scanned image is stored in the RAM 272 of the inspection device 108.

In a step S1125, the inspection processing section 278 of the inspection device 108 compares the scanned image stored in the RAM 272 in the step S1124 and the reference image stored in the RAM 272 in the step S1113. This makes it possible to perform the inspection process (see FIG. 10) described hereinbefore. A result (inspection result) of execution of the inspection process is stored in the RAM 272.

In a step S1126, the data controller 432 of the inspection device 108 transmits the inspection result stored in the RAM 272 in the step S1125 to the inspection unit 106. The CPU 223 of the inspection unit 106 receives the inspection result from the inspection device 108. The inspection result is stored in the RAM 224 of the inspection unit 106.

In a step S1127, the CPU 223 of the inspection unit 106 transmits the inspection result stored in the RAM 224 to the image forming apparatus 101. The data controller 411 of the image forming apparatus 101 receives the inspection result from the inspection unit 106. The inspection result is stored in the RAM 202. Then, the data controller 411 performs processing according to the inspection result. For example, in the case of a print product determined to have no defect as the inspection result (hereinafter "inspection result GOOD"), the data controller 411 discharges the print product into the main tray 324. Further, in the case of the print product determined to have a defect as the inspection result (hereinafter "inspection result NG"), the data controller 411 discharges the print product into the top tray 320. Further, the data controller 411 display the inspection result on the UI panel 203. This causes the inspection result (result of the second processing) to be notified, whereby the user can grasp the inspection result. Hereafter, the steps S1121 to S1127 (part of (b), which is enclosed by a rectangle in FIG. 11) are referred to as "second processing" in which the scanned image and the reference image are compared for inspection, when performing inspection). As shown in FIG. 11, the first processing and the second process are executed in parallel (processing execution step). This makes it possible to eliminate wait time during which inspection of a print product is required to wait after generation of the reference image until storage of the same. Then, by eliminating the wait time, it is possible to promptly start inspection of a print product. Note that components, means, and so forth used in the processing execution step can be referred to as a processing execution unit.

Further, in a case where a print product is a booklet having a plurality of pages, the same number of pieces of image data as the number of pages exists. Then, in the first processing, the reference image of each image is generated as the reference image and stored in the RAM 272. On the other hand, in the second processing, as each reference image is generated in the first processing, inspection is performed by comparing the scanned image of each page and each associated reference image. Particularly, in the second processing, it is preferable that whenever the reference image of one page is generated by the first processing, the scanned image of a page corresponding to the reference image of the one page and the reference image of the one page are compared. This makes it possible to promptly execute inspection.

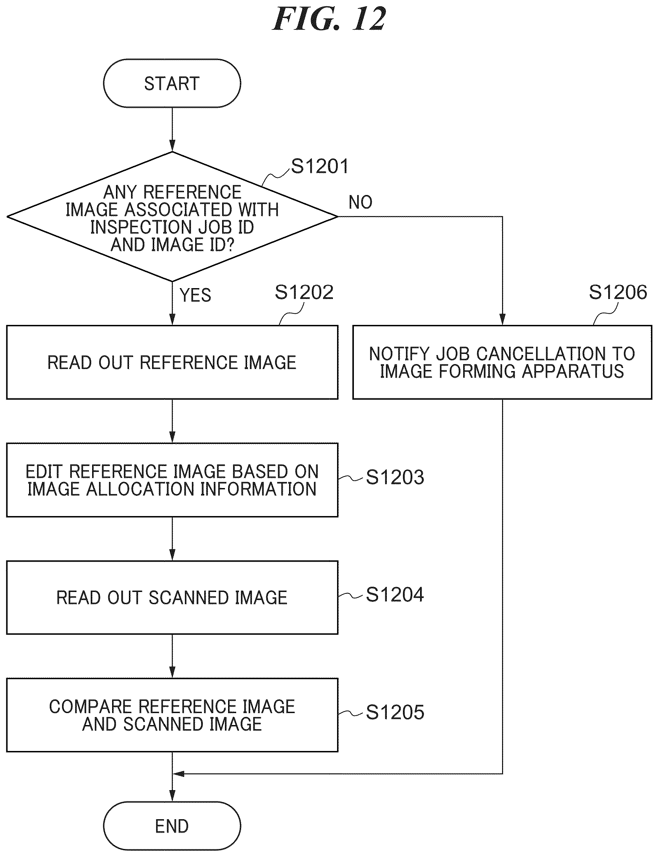

Hereafter, by referring to FIGS. 12 to 15, a second embodiment will be described. The following description will be given mainly of different points from the above-described first embodiment, and the description of the same items will be omitted. FIG. 12 is a flowchart of an inspection process according to the second embodiment, which is performed by the inspection device 108. Referring to FIG. 12, in a step S1201, the inspection process controller 433 of the inspection device 108 determines, by referring to an inspection job ID and an image ID included in the image allocation information 500, whether or not there is a reference image associated with the same inspection job ID and image ID. If it is determined in the step S1201 that there is a reference image, the present process proceeds to a step S1202. On the other hand, if it is determined in the step S1201 that there is no reference image, the present process proceeds to a step S1206.

The step 1202 and steps 203 to S1205 are the same as the steps S1001 to S1004 of the process in FIG. 10.

In the step S1206, the inspection process controller 433 stops the inspection process. Further, the inspection process controller 433 transmits information that the inspection process has been stopped, to the display controller 431. The display controller 431 displays an inspection status screen 1301 as an image notifying that the second processing has been stopped. Further, the inspection process controller 433 notifies cancellation of the print job to the image forming apparatus 101 via the data controller 432. After the step S1206, the present process is terminated.

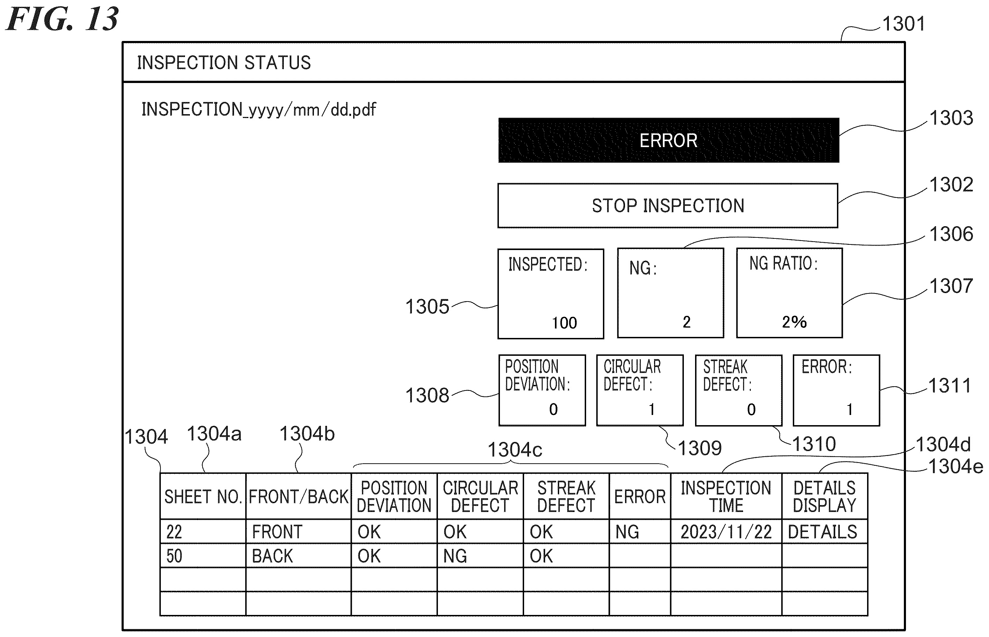

FIG. 13 is a diagram showing a screen displayed on the UI panel 274 of the inspection device 108. The inspection status screen, denoted by reference numeral 1301, shown in FIG. 13 is stored in the storage section 273. The inspection process controller 433 controls the display controller 431 to thereby display the inspection status screen 1301 on the UI panel 274. The inspection status screen 1301 includes an inspection button 1302, an inspection status 1303, an inspection result list 1304, and first inspection information 1305 to seventh inspection information 1311. The inspection button 1302 receives an inspection for execution of inspection or stoppage of inspection by a user's operation thereon. This enables forced execution of inspection or stoppage of inspection at a desired timing. For example, by pressing the inspection button 1302, a character string displayed thereon is changed to "Stop inspection" and the inspection status 1303 is changed to "Inspection is in progress". Then, in a case where the display controller 431 receives stoppage of inspection, the inspection status is changed to "ERROR". The first inspection information 1305 is the number of inspected sheets. The second inspection information 1306 is the number of sheets of inspection result NG. The third inspection information 1307 is a ratio of the number of sheets of inspection result NG to the number of inspected sheets, i.e. a NG ratio. The fourth inspection information 1308 is the number of occurrences of print position deviation which is one of causes of inspection result NG. The fifth inspection information 1309 is the number of occurrences of circular defect (spot) which is one of the causes of inspection result NG. The sixth inspection information 1310 is the number of occurrences of streaky defect (steak) which is one of the causes of inspection result NG. The seventh inspection information 1311 is the number of occurrences of timeout due to non-completion of inspection within a predetermined inspection time period, which is determined to be an error, thereby resulting in inspection result NG equivalent.

The inspection result list 1304 includes items 1304a to 1304e. In each of the items 1304a to 1304e, predetermined information is entered whenever inspection result NG occurs. The item 1304a is a number indicating a printing sheet (sheet) resulting in inspection result NG. The item 1304b is information on whether the side of a printing sheet resulting in inspection result NG is a front side or a back side. The items 1304c are causes of inspection result NG. The item 1304d is an inspection time. The item 1304e is linking operation information, which is linked to an NG details screen. By depressing "Details" of the item 1304e, the inspection process controller 433 controls the display controller 431 to thereby display a screen on which a captured image resulting in inspection result NG, a defect position, and the like can be viewed. The inspection result list 1304 enables the type of a defect and the like to be grasped.

As described above, in the inspection system 1000, in a case where it is determined, when the image allocation information 500 is received, that there is no reference image, i.e. that the first processing has not been executed, the inspection is stopped, i.e. execution of the second processing is stopped. This prevents wasteful inspection. Note that determination as to whether or not the first processing has been executed is determined e.g. by the data controller 421 (determination unit) of the reference image generation device 111. Further, in a case where it is determined that there is no reference image, the display of the inspection status screen 1301 can be inhibited. Further, for example, in a case where the reference image has been acquired but the scanned image has not been acquired, this can be regarded as image missing and added as inspection result NG.

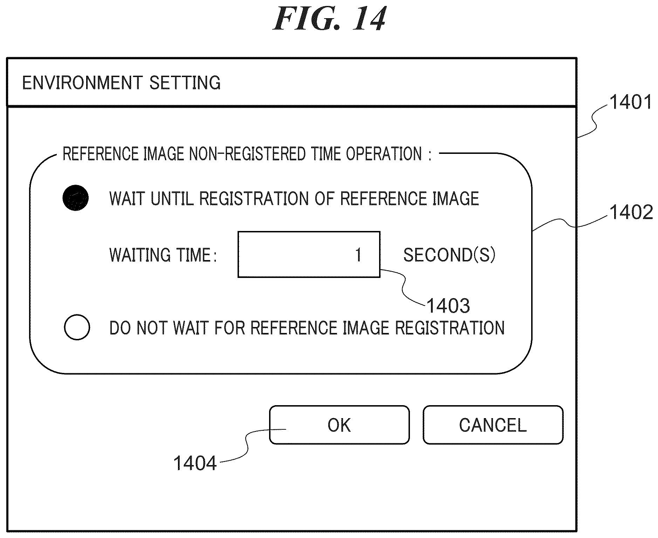

FIG. 14 is a diagram showing a screen displayed on the UI panel 274 of the inspection device 108. A setting screen 1401 shown in FIG. 14 is a screen for specifying an operation to be performed in a case where a reference image has not been registered. The setting screen 1401 is stored in the storage section 273. In a case where an environment setting mode is set, the inspection process controller 433 controls the display controller 431 to thereby display the setting screen 1401 on the UI panel 274. The setting screen 1401 includes a reference image non-registered time operation 1402, a time period 1403, and an OK button 1404. In the reference image non-registered time operation 1402, a setting of operation to be performed in the case where a reference image has not been registered for use in inspection. In a case where "WAIT UNTIL REGISTRATION OF REFERENCE IMAGE" is selected in the reference image non-registered time operation 1402, a desired time period can be entered in the time period 1403. This causes the inspection process controller 433 to temporarily stop the inspection process over a time period entered in the time period 1403. Further, in a case where "DO NOT WAIT FOR REFERENCE IMAGE REGISTRATION" is selected in the reference image non-registered time operation 1402, the inspection process controller 433 stops the inspection process. Then, by pressing the OK button 1404 in a state in which the reference image non-registered time operation 1402 has been set, the display controller 431 controls the data controller 432 to thereby cause information (environment setting information) set in the reference image non-registered time operation 1402 to be stored in the storage section 273.

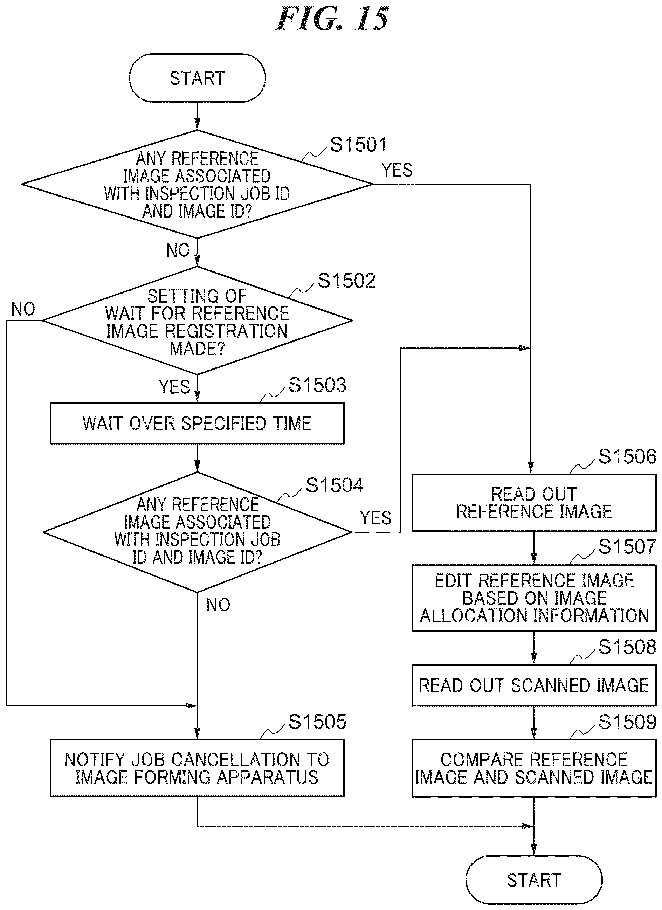

FIG. 15 is a flowchart of an inspection process (variation) performed by the inspection device 108. Referring to FIG. 15, a step S1501 and steps S1505 to S1509 are the same as the steps S1201 to S1205 of the inspection process in FIG. 12. If it is determined in the step S1501 that there is no reference image, the process proceeds to a step S1502. In the step S1502, the inspection process controller 433 of the inspection device 108 determines, by referring to the environment setting information stored in the storage section 273, whether the setting of "WAIT UNTIL REGISTRATION OF REFERENCE IMAGE" has been made. If it is determined in the step S1502 that the setting has been made, the process proceeds to a step S1503. On the other hand, it is determined in the step S1502 that the setting has not been made, the process proceeds to the step S1505.

In the step S1503, the inspection controller 433 refers to the environment setting information registered in the storage section 273 to read the wait time period entered in the time period 1403. Then, the inspection process controller 433 temporarily stops the inspection process, i.e. waits over waiting time. After the lapse of the waiting time, the process proceeds to a step S1504.

In a step S1504, similar to the step S1501, the inspection process controller 433 determines, by referring to the inspection job ID and image ID included in the image allocation information 500, whether or not there is a reference image associated with the inspection job ID and the image ID. If it is determined in the step S1504 that there is the reference image, the process proceeds to the step S1506. On the other hand, if it is determined in the step S1504 that there is no reference image, the process proceeds to the step S1505.

In the step S1505, the inspection process controller 433 transmits information that the inspection process has been stopped, to the image forming apparatus 101.

As described above, in the inspection system 1000, in a case where it is determined that there is no reference image, and that, after the lapse of the predetermined time period from the determination, it is determined that there is a reference image, the inspection process (second processing) can be executed. On the other hand, even after the lapse of the predetermined time period, if it is still determined that there is no reference image, the inspection process can be stopped. With such a configuration, it is possible to execute the inspection process as much as possible.

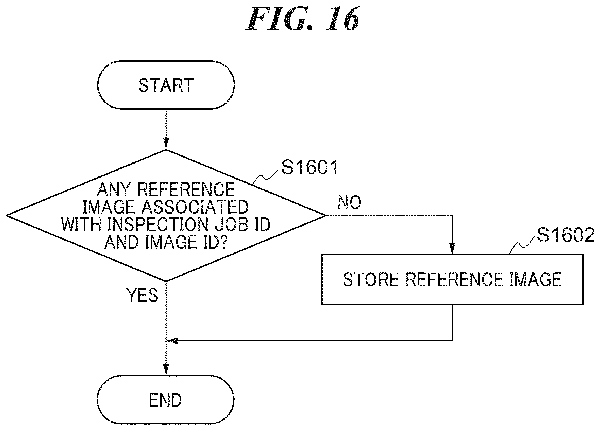

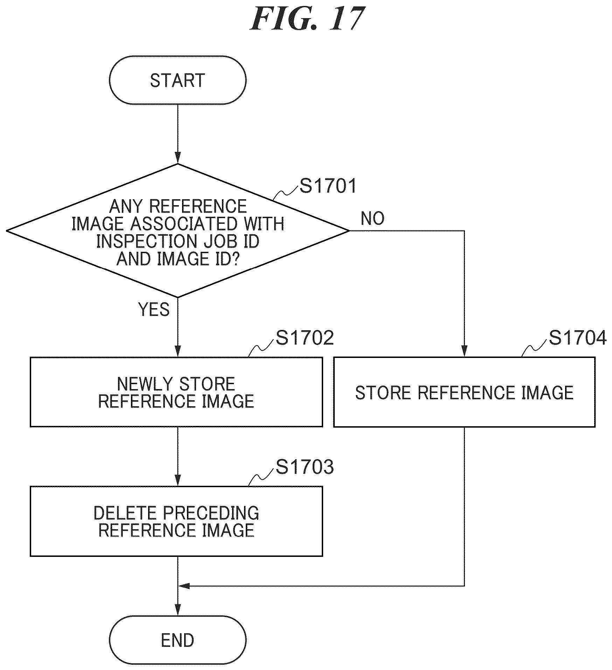

A third embodiment will be described with reference to FIGS. 16 and 17. The following description of the third embodiment will be mainly given of different points from the above-described embodiments, and the description of the same points is omitted. FIG. 16 is a flowchart of a process performed by the inspection device 108 according to the third embodiment. Referring to FIG. 16, in a step S1601, the inspection process controller 433 of the inspection device 108 determines, by referring to an inspection job ID and an image ID included in the image allocation information 500, whether or not there is a reference image associated with the inspection job ID and the image ID. If it is determined in the step S1601 that there is a reference image, the present process is terminated. This prevents wasteful storage of a reference image. On the other hand, if it is determined in the step S1601 that there is no reference image, the process proceeds to a step S1602.

In the step S1602, the inspection process controller 433 stores the reference image in the RAM 272, followed by terminating the present process.

FIG. 17 is a flowchart of a process (variation) performed by the inspection device 108. Referring to FIG. 17, steps S1701 and S1704 are the same as the steps S1601 and S1602 of the process in FIG. 16. If it is determined in the step S1601 that there is a reference image, the process proceeds to a step S1702.

In the step S1702, the inspection process controller 433 of the inspection device 108 newly stores the reference image in the RAM 272.

In a step S1703, the inspection process controller 433 deletes a reference image which is associated with the inspection job ID and image ID attached to the reference image determined in the step S1701, and at the same time, was stored in the RAM 272 before execution of the step S1702. This makes it possible to use a latest reference image for the inspection process. After execution of the step S1703, the present process is terminated. Note that by omitting the steps S1702 and S1703, a latest reference image can be written over the reference image already stored in the RAM 272.

As described above, the inspection system 1000 can acquire image data a plurality of times. Then, by using image data acquired each time, as a reference image, if the reference image acquired is the same as a reference image already stored in the RAM 272, the storage of the reference image acquired is omitted. On the other hand, if the reference image acquired is different from the reference image already stored in the RAM 272, the latest one of the reference images is stored in the RAM 272, and the reference image already stored in the RAM 272 is deleted from the RAM 272. With such a configuration, it is possible to prevent wasteful storage of a reference image and use the latest reference image for the inspection process.

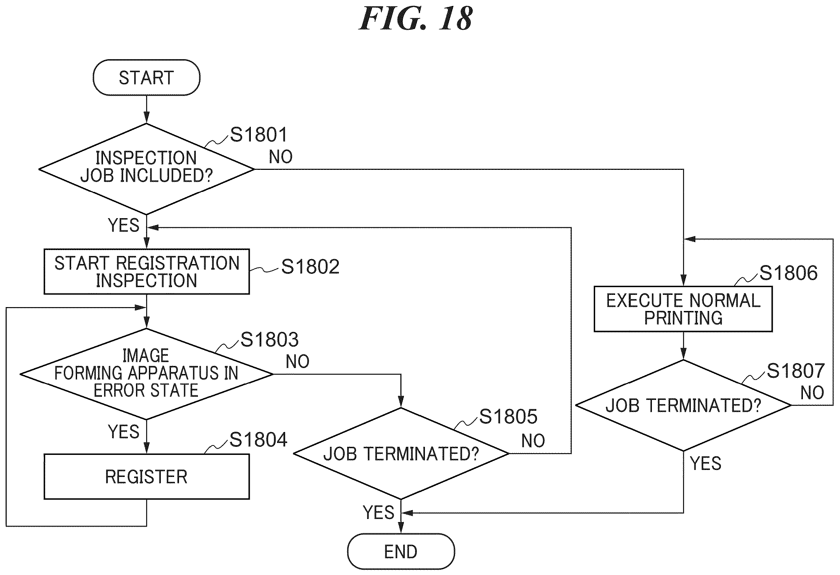

Hereafter, a fourth embodiment will be described with reference to FIG. 18. The following description of the fourth embodiment will be mainly given of different points from the above-described embodiments, and the description of the same points is omitted. FIG. 18 is a flowchart of a job process performed by the image forming apparatus 101, according to the fourth embodiment. Referring to FIG. 18, in a step S1801, the data controller 411 of the image forming apparatus 101 determines whether or not the print job includes an inspection job. If it is determined in the step S1801 that the print job includes an inspection job, the process proceeds to a step S1802. On the other hand, if t is determined in the step S1801 that the print job includes no inspection job, the process proceeds to a step S1806.

In the step S1802, the data controller 411 starts registration inspection, i.e. processing corresponding to the first processing and the second processing (see FIG. 11).

In a step S1803, the data controller 411 determines whether or not an error notification notifying that the image forming apparatus 101 is in an error state has been received from the print controller 413. The error state is a state in which one of outputting of a print product by the printer engine 210 and acquisition of a scanned image by the image capturing section 225 is forcedly stopped, or the like. If it is determined in the step S1803 that the error notification has been received, the process proceeds to a step S1804. On the other hand, if it is determined in the step S1803 that the error notification has not been received, the process proceeds to a step S1805.

In the step S1804, the data controller 411 controls the reference image generation device 111, the inspection unit 106, and the inspection device 108 to thereby cause them to perform registration processing (first processing). This makes it possible to perform the first processing even when the image forming apparatus 101 is in an error state. After execution of the step S1804, the process returns to the step S1803 to sequentially execute the following steps.

In the step S1805, the data controller 411 determines whether or not a print job termination notification has been received. If it is determined in the step S1805 that a print job termination notification has been received, the present process is terminated. On the other hand, it is determined in the step S1805 that a print job termination notification has not been received, the process returns to the step S1802 to sequentially execute the following steps.

In the step S1806, the data controller 411 controls the printer engine 210 to execute normal printing without accompanying inspection. Note that in this case, attachment of an inspection ID and an image ID is omitted.

In a step S1807, similar to the step S1805, the data controller 411 determines whether or not a print job termination notification has been received. If it is determined in the step S1807 that a print job termination notification has been received, the present process is terminated. On the other hand, if it is determined in the step S1807 that a print job termination notification has not been received, the process returns to the step S1806 to sequentially execute the following steps.

As described above, in the inspection system 1000, it is possible to execute the first processing even when the image processing apparatus 101 is in an error state. Further, in a case where the above-described forced stoppage is removed and the error state of the image forming apparatus 101 is removed, parallel execution of the first processing and the second processing can be resumed.

According to the present disclosure, it is possible to promptly start inspection of a print product.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An inspection system comprising:
a storage unit configured to store region information set before a single instruction for transmitting data including an image to be inspected based on the set region information is received by a computer from a user;
an interface configured to receive the data sent in response to the single instruction from the computer; and
one or more controllers having one or more processors and one or more memories, the one or more controllers configured to:
(a) generate reference data and (b) cause a printing unit to print the image, based on the received data; and
inspect a read image generated by reading the printed image, based on the generated reference data and the stored region information.

2. The inspection system according to claim 1, wherein the controller performs inspection by comparing the generated reference data and the read printed page.

3. The inspection system according to claim 1, wherein the reference data is generated from the received data without printing based on the received data.

4. The inspection system according to claim 1, wherein the reference data is generated from the received data without using the printing unit.

5. The inspection system according to claim 1, wherein, the one or more controllers is/are configured to, in response to receiving and based on the data, (a) generate reference data and (b) cause a printing unit to print at least one page of images on recording media to create printed media.

6. The inspection system according to claim 1, wherein the one or more controllers is/are configured to perform parallel execution of first processing in which the read image is inspected based on the generated reference data and the stored region information, and second processing in which reference data of a page next to a page of the generated image data is generated.

7. The inspection system according to claim 1, wherein the interface is configured to receive one print job including at least the received data, and
wherein the one print job is a print job for which the set region information is used.

8. The inspection system according to claim 7, wherein the one or more controllers is/are further configured to divide the received data included in the one print job into data of a plurality of pages corresponding to the generated reference data, and data of a plurality of pages corresponding to the created printed media.

9. The inspection system according to claim 1, wherein the region information is information including an inspection region and an inspection level.

10. The inspection system according to claim 1, wherein the data includes images of a plurality of pages,
wherein the printed media on which the printing unit has performed printing is print media of a plurality of pages, and
wherein the one or more controllers is/are further configured to inspect, based on the generated reference data, each of read images of the plurality of pages formed by reading the created printed media.

11. The inspection system according to claim 1, wherein the one or more controllers is/are further configured to perform inspection, whenever reference data of one page is generated, by comparing a read image of a page corresponding to the reference data of the one page, and the reference data of the one page.

12. The inspection system according to claim 1, further comprising a storage medium for storing data, and
wherein the generated reference data is stored in the storage medium.

13. The inspection system according to claim 1, wherein the one or more controllers is/are further configured to:
determine whether or not the reference data has been generated, and
stop execution of the inspection in a case where the reference data has not been generated.

14. The inspection system according to claim 13, wherein the one or more controllers is/are further configured to:
execute the inspection, in a case where it is determined that the reference data has not been generated, and it is determined that the reference data has been generated after the lapse of a predetermined time period from the determination, and
stop execution of the inspection, in a case where it is determined that the reference data has not been generated even after the lapse of the predetermined time period from the determination.

15. The inspection system according to claim 13, wherein, in a case where the execution of the inspection is stopped, the one or more controllers is/are further configured to notify this fact.

16. The inspection system according to claim 13, further comprising:
an image forming unit configured to form images on recording media and create the printed media comprising a plurality of pages;
a conveying unit configured to convey the created printed media; and
a reading unit configured to read images on each page of the created printed media conveyed by the conveying unit and generate the read image data of the plurality of pages.

17. A method of controlling an inspection system including:
a storage unit configured to store region information set before a single instruction for transmitting data including an image to be inspected based on the set region information is received by a computer from a user, and
an interface configured to receive the data sent in response to the single instruction from the computer,
the method comprising:
(a) generating reference data and (b) causing a print unit to print the image, based on the received data; and
inspecting a read image generated by reading the printed image, based on the generated reference data and the stored region information.
